# EUROPÄISCHE PATENTSCHRIFT

(11) **EP 2 195 176 B1**
(45) Veröffentlichungstag und Bekanntmachung des Hinweises auf die Patenterteilung: **27.03.2013**
(21) Anmeldenummer: 08801238.0
(22) Anmeldetag: 27.08.2008
(51) Int. Cl.: B64C 25/36, F16C 19/54, B60B 27/02

(54) **RADLAGERUNG EINES FLUGZEUGFAHRWERKS**
WHEEL BEARING OF AN AIRCRAFT LANDING GEAR
SYSTÈME DE ROULEMENT DE ROUE POUR TRAIN D'ATTERRISSAGE D'AVION

(30) Priorität: 06.09.2007 DE 102007042369
(43) Veröffentlichungstag der Anmeldung: 16.06.2010
(73) Patentinhaber: Schaeffler Technologies AG & Co. KG, 91074 Herzogenaurach (DE)
(72) Erfinder: DOTZEL, Torsten, 97502 Euerbach (DE); LANG, Robin, 97494 Bundorf (DE); PRÖSCHEL, Christian, 97072 Würzburg (DE); SEBALD, Wilhelm, 97631 Bad Königshofen (DE); KREISELMEIER, Gerhard, 97456 Dittelbrunn (DE)
(86) Internationale Anmeldenummer: PCT/DE2008/001430
(87) Internationale Veröffentlichungsnummer: WO 2009/030200

(56) Entgegenhaltungen:
- US-A- 2 406 068
- US-A- 2 998 282
- US-B1- 6 615 958

## Beschreibung

### Gebiet der Erfindung

Die Erfindung liegt auf dem Gebiet der Fahrwerke für Fluggeräte, insbesondere Fracht- und Verkehrsflugzeuge. Auf diesem Einsatzgebiet sind verschiedene, teilweise gegenläufige Optimierungskriterien zu erfüllen. So sind derartige Fahrwerke und damit Radlagerungen in Relation zur die Gesamtbetriebsdauer des Fluggeräts nur kurzzeitig - in diesen Phasen aber äußerst stark - belastet. Während dieser Belastungsphasen müssen die Radlagerungen mit höchster Zuverlässigkeit arbeiten, extreme Kräfte und Momente aufnehmen - beispielsweise beim Bremsvorgang nach der Landung - und müssen dennoch möglichst gewichtsarm und wartungsarm sein.

Eine gattungsgemäße Radlägung ist aus der US 6 615 955 B bekannt.

Hinsichtlich der Wartung, insbesondere zur Lager- und Bremseninspektion/Erneuerung ist es wünschenswert, Standardlager verwenden zu können, aber dennoch einen hohen Integrationsgrad zu realisieren und möglichst einfache und kompakte Baugruppen bereitzustellen.

Vor diesem Hintergrund besteht die Aufgabe der vorliegenden Erfindung in der Bereitstellung einer Radlagerung für Flugzeuge, die eine hohe Lebensdauer und Zuverlässigkeit bei einer möglichst geringen Anzahl von Einzelteilen aufweist und einfach zu handhabende und zu montierende bzw. zu demontierende Baugruppen zur Verfügung stellt.

Diese Aufgabe wird erfindungsgemäß durch eine Radlagerung mit den Merkmalen des Patentanspruchs 1 gelöst.

Demgemäß umfasst die erfindungsgemäße Radlagerung eines Flugzeugfahrwerks eine Felge, die über zwei Wälzlager einer Lageranordnung um eine Achse drehbar gelagert ist, und ein einteiliges Außenring-Lagergehäuse, das die Außenringe der Wälzlager gemeinsam aufnimmt. Dabei ist die Felge lösbar mit der Lageranordnung derart verbunden, dass die Felge unabhängig von der Lageranordnung montierbar bzw. demontierbar ist.

Ein wesentlicher Aspekt der Erfindung besteht damit darin, dass die Außenringe von einem einzigen Bauteil, nämlich dem Außenring-Lagergehäuse, gemeinsam gehalten sind. Die Lageranordnung erfährt bereits dadurch eine erhebliche Verbesserung hinsichtlich ihrer Montierbarkeit bzw. Demontierbarkeit. Die Lageranordnung kann vorteilhafterweise mit den Wälzlagern vorab bestückt und im Montageprozess einfach auf die jeweilige tragende Hohlachse oder den Lagerzapfen aufgebracht und der drehbare Teil der Lageranordnung später dann mit der Felge bestückt werden. Unter dem drehbaren Teil der Lageranordnung ist im Rahmen der vorliegenden Erfindung der Bereich der Lageranordnung zu verstehen, der im Betrieb gegenüber der feststehenden Lagerung (z.B. der Hohlachse oder dem Lagerzapfen für die Radlagerung) relativ um die Radachse rotiert.

Ein weiterer Aspekt der Erfindung besteht darin, dass die Felge so mit dem drehbaren Teil der Lageranordnung verbunden und so gestaltet ist, dass sie unabhängig von der Lageranordnung montiert bzw. demontiert werden kann. Dies stellt vor allem im Hinblick auf die Wartung des Flugzeugfahrwerks, insbesondere auf die Inspektion und Wartung der Bremsenanordnung, einen wesentlichen Vorteil dar. Mit der erfindungsgemäßen Radlagerung kann nämlich die Felge (ggf. mit dem darauf befindlichen Reifen) einfach abgenommen und damit die Bremsenanordnung zugänglich gemacht werden.

Nach einer vorteilhaften Ausgestaltung der Erfindung bildet das Außenring-Lagergehäuse den drehbaren Teil der Lageranordnung, an dem die Felge lösbar montiert ist. Bevorzugt kann die Felge durch entsprechende Verschraubung mit einem sich radial erstreckenden Angussteil oder Fortsatz des Außenring-Lagergehäuses verbunden sein.

Nach einer montagetechnisch bevorzugten Ausgestaltung der Erfindung ist die Felge zweiteilig. Die beiden Felgenteile können vorab miteinander verbunden - beispielsweise verschraubt - werden, so dass die Felge insgesamt eine einstückige, einfach zu handhabende Einheit bildet.

Nach einer weiteren vorteilhaften Ausgestaltung der Erfindung sind die Außenringe integrale Bestandteile des Außenring-Lagergehäuses, indem nämlich die Wälzlager-Außenringe aus dem Material des Lagergehäuses gebildet sind. Dies verringert die Anzahl der zu montierenden Einzelteile weiter.

Bekanntermaßen bedürfen bestimmte Lagerbauarten, beispielsweise Kegelrollenlager oder Schrägrillenkugellager, für optimierte Lagereigenschaften und Lagerlebensdauern einer definierten axialen Lagervorspannung. Diese wird üblicherweise durch entsprechende axiale Vorspannelemente, wie beispielsweise Achsmuttern, aufgebracht. Um bei der Fertigung eine besonders einfach eine reproduzierbare Vorspannung einstellen zu können, sieht eine bevorzugte Fortbildung der Erfindung vor, dass die Lagerringe Fortsätze aufweisen, die aufeinander zulaufen zur Einstellung einer axiale Distanz bzw. Vorspannung der Wälzlager dienen.

Die Montage und Demontage wird nach einer bevorzugten Weiterbildung der Erfindung dadurch weiter erleichtert, dass die Fortsätze über einen Clip miteinander vorverbunden sind.

Um eine nach außen geschlossene Lageranordnung zu realisieren, ist nach einer weiteren bevorzugten Ausgestaltung der Erfindung zwischen den einander zugewandten Endbereichen der Fortsätze eine umlaufende Dichtung vorgesehen.

Eine bei Flugzeugfahrwerken besonders anspruchsvolle und wartungsbedürftige Baugruppe ist die Bremsenanordnung. Diese ist umfasst üblicherweise mehrere mit der Felge drehfest gekoppelte Bremsscheiben und in axialer Richtung dazwischen liegend alternierend drehfest angeordnete Bremsklötze. Bei betriebsgemäßer Bremsung werden die Bremsklötze mit einer Axialkraft beaufschlagt, die zur Sicherstellung einer ausreichenden Bremswirkung von einer Gegenhalterung oder einem Gegenlager aufgenommen werden muss. In diesem Zusammenhang sieht eine bevorzugte Ausgestaltung der Erfindung vor, dass an dem Außenring-Lagergehäuse ein Gegenlager lösbar befestigt ist, das die von einer Scheibenbremsenanordnung im Bremsfall aufgebrachte Axialkraft aufnimmt. Die lösbare Anordnung des Gegenlager bietet den Vorteil, dass zum Austausch der Bremsbeläge bzw. der Bremsscheiben nicht der gesamte Bremssattel bzw. die Bremsanordnung demontiert werden muss, sondern nach Demontage der Felge die auszutauschenden Bauteile in axialer Richtung entnommen bzw. erneut bestückt werden können.

Nach einer weiteren Ausgestaltung der Erfindung weist das äußere Wälzlager der Radlagerung einen größeren Durchmesser auf. Dadurch vergrößert sich einerseits die Tragkraft der Lagerung und andererseits lassen sich etwaige, auf die Radlagerung quer zur Radachse wirkende höhere Drehmomente - beispielsweise bei einer Seitenwindlandung - von der Lagerung aufnehmen.

Um bei hoher Belastbarkeit eine in radialer Richtung besonders kompakte Anordnung zu realisieren, ist nach einer weiteren vorteilhaften Ausgestaltung der Erfindung vorgesehen, dass die Lageranordnung in axialer Richtung gesehen neben der Bremsenanordnung angeordnet ist.

In Anwendungsfällen, in denen zwar ein vergleichsweise großer radialer Bauraum, bei gleichzeitig beschränktem axialen Bauraum für die Radlagerung zur Verfügung steht, ist eine Ausgestaltung der Erfindung vorteilhaft, bei der die Lageranordnung von der Bremsenanordnung umgeben ist.

Die Erfindung und weitere Vorteile der Erfindung werden nachfolgend anhand einer Zeichnung und der darin dargestellten Ausführungsbeispiele weiter erläutert.

Dabei zeigen:
- Figur 1: eine erste erfindungsgemäße Radlagerung eines Flugzeugfahrwerks,
- Figur 2: eine zweite erfindungsgemäße Radlagerung,
- Figur 3: die Einzelheit A aus Figur 2,
- Figur 4: eine dritte erfindungsgemäße Radlagerung,
- Figur 5: eine vierte erfindungsgemäße Radlagerung,
- Figur 6: eine fünfte erfindungsgemäße Radlagerung,
- Figur 7: eine sechste erfindungsmäße Radlagerung,
- Figur 8: eine siebte erfindungsgemäße Radlagerung und
- Figur 9: eine achte erfindungsgemäße Radlagerung.

In den Figuren sind gleiche oder funktionsgleiche Elemente mit denselben Bezugszeichen versehen.

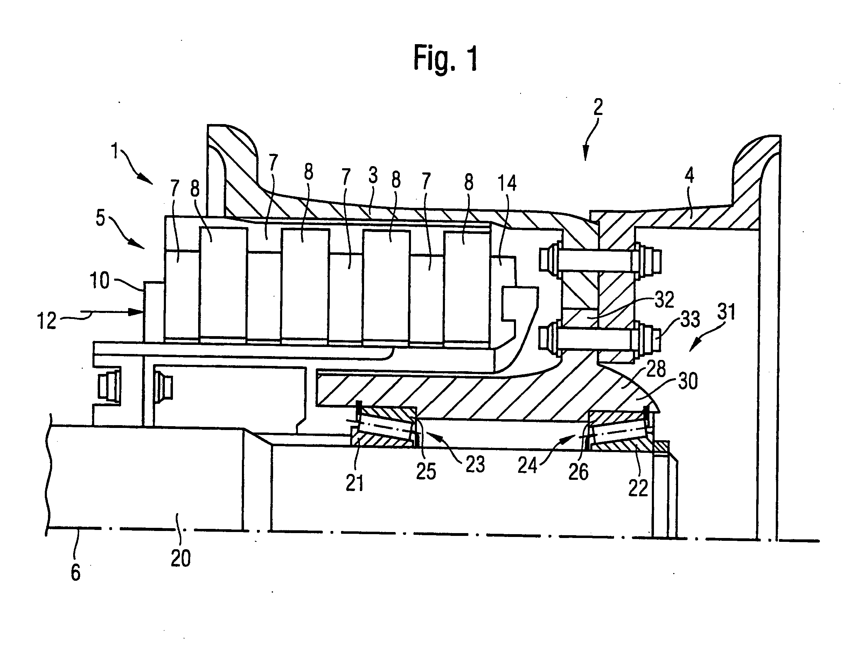

Figur 1 zeigt eine erfindungsgemäße Radlagerung 1 eines Flugzeugfahrwerks. Die Radlagerung umfasst eine zweiteilige Felge 2, auf der ein nicht dargestellter Reifen aufgezogen ist und die aus zwei Felgenteilen 3, 4 zusammengesetzt ist. Die Felgenteile 3, 4 sind über am Kreisumfang vorgesehene Verbindungsschrauben miteinander verbunden und bilden so eine eigenständige Baueinheit.

Andeutungsweise ist eine Bremsenanordnung 5 erkennbar, die aus entlang der Längsachse 6 alternierend angeordneten Bremsbelegen oder Bremsklötzen 7 und Bremsscheiben 8 aufgebaut ist. Die Bremsanordnung 5 ist über einen andeutungsweise gezeigten Stempel 10 in axialer Richtung druckbeaufschlagbar, indem eine entsprechende axiale Bremskraft 12 auf die Anordnung ausgeübt wird. Zur Aufnahme der Gegenkraft ist auf der anderen Seite der Bremsenanordnung 5 ein Gegenlager 14 vorgesehen.

Ein Achsstummel oder eine Hohlachse 20 des im Übrigen nicht näher dargestellten Flugzeugfahrwerks trägt Innenringe 21, 22 von zwei axial beabstandet angeordneten Wälzlagern 23, 24. Die Wälzlager 23, 24 sind in den Ausführungsbeispielen als Kegelrollenlager ausgestaltet. Grundsätzlich können aber auch andere Lager, beispielsweise Schrägrillenkugellager, Verwendung finden.

Die Lageraußenringe 25, 26 der Wälzlager 23, 24 sind in einem einteiligen Außenring-Lagergehäuse 28 gemeinsam aufgenommen. Beispielsweise können die Außenlagerringe 25, 26 in das Gehäuse 28 eingepresst sein. Der Innenring 22 des Wälzlagers 24 ist auf der Achse 20 in an sich bekannter Weise mit einer Achsmutter fixiert.

Bei dieser Ausgestaltung bildet das Außenring-Lagergehäuse 28 den - in Bezug auf die feststehende Achse 20 betrachtet - drehbaren Teil 30 der Lageranordnung 31. Die Felge 2 ist mit einem sich radial nach außen erstreckenden, flanschförmigen umlaufenden Fortsatz 32 des Lagergehäuses 28 mittels mehrerer auf einem Teilkreis angeordneter Schrauben 33 lösbar verbunden.

Zur Montage bzw. Demontage beispielsweise im Rahmen von Wartungs- und Inspektionsarbeiten kann die Felge 2 durch Lösen der Schrauben 33 als eine Baueinheit einstückig von der Radlagerung bzw. der Achse 20 axial nach rechts entfernt werden. Damit ist die Bremsenanordnung 5 gut zugänglich. Außerdem bildet das Außenring-Lagergehäuse eine bei der Montage einfach zu handhabende Baueinheit, die zur Erfüllung der eigentlichen Rotationslagerung nur vergleichsweise wenige zu montierende Einzelteile umfasst.

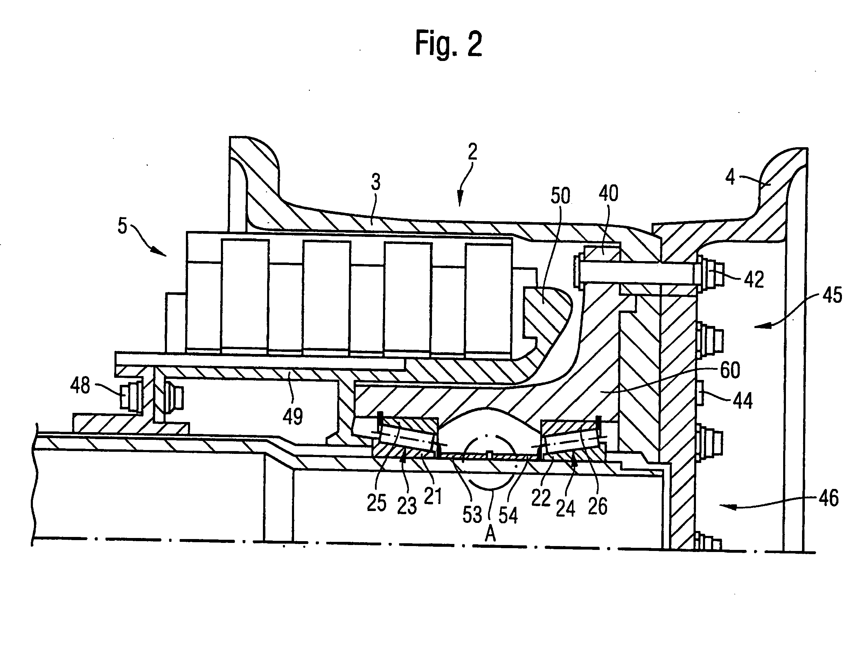

Figur 2 zeigt eine Variante einer erfindungsgemäßen Radlagerung. Das in Figur 2 gezeigte Außenring-Lagergehäuse 40 ist insoweit modifiziert, als es sich radial weiter nach außen erstreckt als das Lagergehäuse 28 in Figur 1. Durch mehrere am äußeren Teilkreisumfang verteilte Schrauben 42 ist die zweiteilige Felge 2 mit ihren Felgenteilen 3 und 4 lösbar mit dem Außenring-Lagergehäuse 40 verbunden. Die Felgenteile 3 und 4 sind unter Bildung einer Baueinheit über nur angedeutete Schraubverbindungen 44 vorab verbunden.

Auch hier bildet das Außenring-Lagergehäuse den drehenden Teil 45 der Lageranordnung 46. An einem ortsfesten, über eine Verschraubung 48 verbundenen Fußbereich 49 ist hier ein Gegenlager 50 zur Aufnahme der von der Bremsenanordnung 5 im betriebsgemäßen Bremsfall ausgeübten Axialkraft vorgesehen.

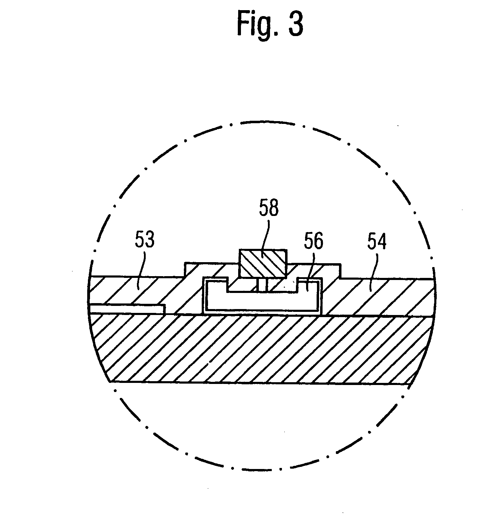

Die Lageranordnung 46 weist hinsichtlich der Lagerinnenringe 21, 22 insoweit eine Modifikation auf, als diese mit jeweils einem axialen Fortsatz 53, 54 versehen sind. Die axial aufeinander zu weisenden Fortsätze 53, 54 bilden Distanzstücke zur Einstellung einer axialen Distanz der Wälzlager 23, 24. Die Fortsätze 53, 54 sind über einen - wie die in Figur 3 vergrößert dargestellte Detailansicht A verdeutlicht - Clip 56 miteinander vorverbunden. Der Clip hält die beiden Fortsätze in Position und klemmt zwischen ihnen eine umlaufende Dichtung 58 ein. Damit ist die Lageranordnung 46 in vorteilhafter Weise als geschlossene, gegen Verschmutzung und gegen Eindringen von Medien von außen geschützte Einheit ausgebildet. Die Lagerinnenringe 21, 22 - bzw. die von diesen gebildeten Laufflächen für die Wälzkörper - können vorteilhafterweise integral aus dem Material 60 des Außenring-Lagergehäuses gebildet sein.

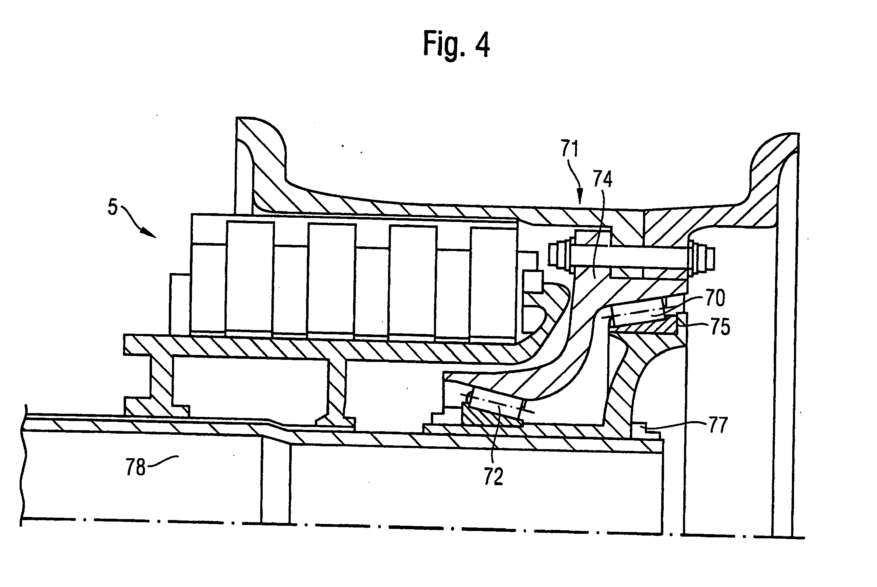

Figur 4 zeigt eine modifizierte erfindungsgemäße Radlagerung, die in axialer Richtung dadurch kompakter ausgebildet sowie besonders tragfähig und momentenaufnahmefähig ist, dass das äußere Wälzlager 70 der Lageranordnung 71 einen größeren Durchmesser aufweist als das innenliegende Wälzlager 72. Dazu ist das Außenring-Lagergehäuse 74 quasi stufenförmig ausgebildet, wobei das Lagerteil für die Innenringe der Wälzlager eine entsprechende Stufung 75 aufweist. Das Innenteil ist über eine Achsmutter 77 auf der Hohlachse 78 der Radlagerung fixiert.

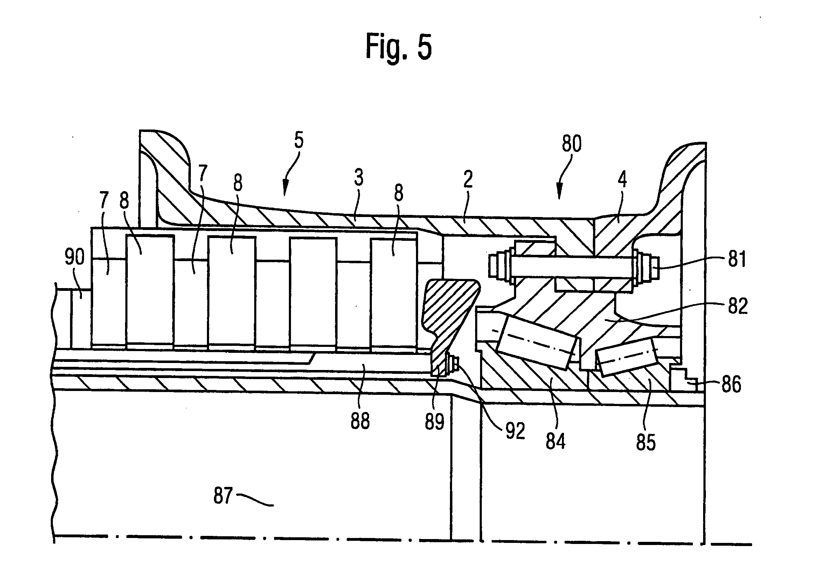

Bei der in Figur 5 gezeigten Ausführung einer erfindungsgemäßen Radlagerung ist die Lageranordnung 80 seitlich in axialer Richtung neben der Bremsenanordnung 5 angeordnet. Auch hier ist die Felge 2 mit ihren beiden Felgenteilen 3, 4 über mehrere am Teilkreis angeordnete Axialschrauben 81 mit dem Außenring-Lagergehäuse 82 verbunden. Die Lagerinnenringe 84, 85 sind in an sich bekannter Weise mit einer Achsmutter 86 auf einer Achse 87 fixiert. Zur Demontage wird die Schraubverbindung 81 gelöst und die Felge 2 kann dann axial nach rechts entfernt werden. Sie gibt damit nicht nur die Bremsanordnung 5 frei, sondern auch ein in diesem Ausführungsbeispiel lösbar an einem Träger 88 befestigtes Gegenlager 89. Das Gegenlager dient wie schon zuvor beschrieben zur Aufnahme der von einem Bremsstempel 90 aufgebrachten und über die Bremsbeläge/Bremsklötze 7 bzw. Bremsscheiben 8 übertragenen Bremskräfte.

Diese Ausgestaltung ist für die Bremseninspektion und Wartung deshalb besonders vorteilhaft, weil das über eine Schraubverbindung 92 lösbar fixierte Gegenlager 89 durch Lösen der Verbindung 92 einfach entfernt werden kann und damit die Bremsscheiben bzw. Bremsbeläge axial zugänglich sind und aus der Bremsenanordnung 5 entnommen werden können. Zur momentenübertragenden Fixierung der Bremsklötze 7 einerseits und der Bremsscheiben 8 andererseits können diese axiale, über den Umfang verteilte Ausnehmungen oder Nuten aufweisen, in die entsprechende Stege der Felge bzw. der drehenden Elemente einerseits und entsprechende Stege oder Vorsprünge eines Bremssattels oder des Trägers 88 andererseits eingreifen.

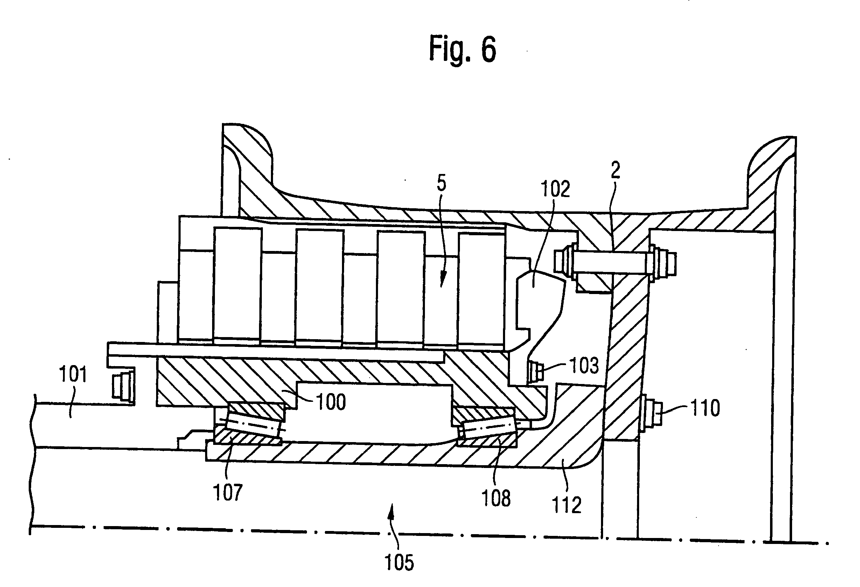

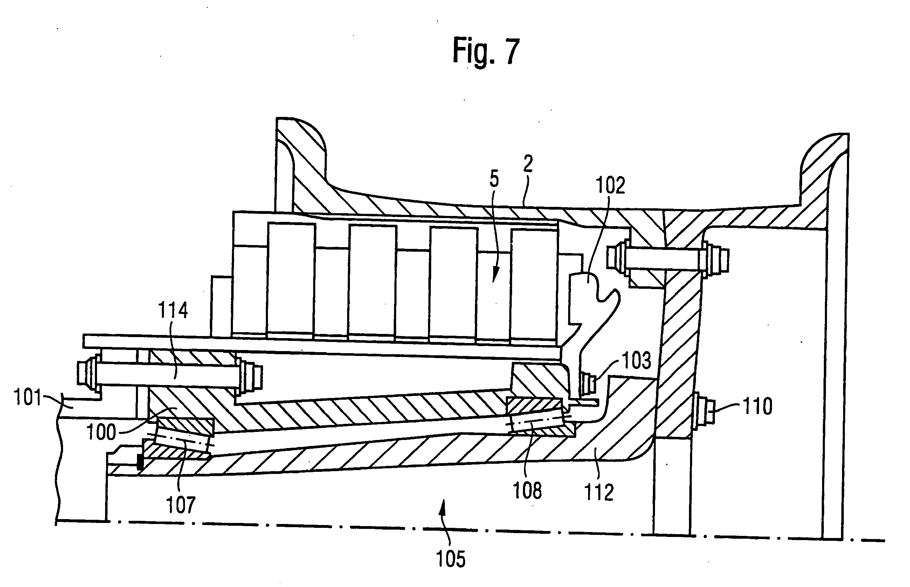

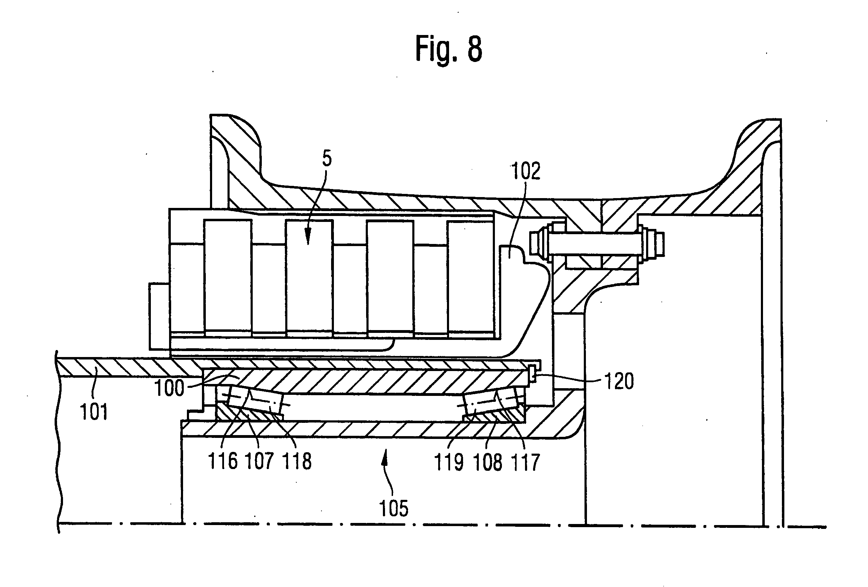

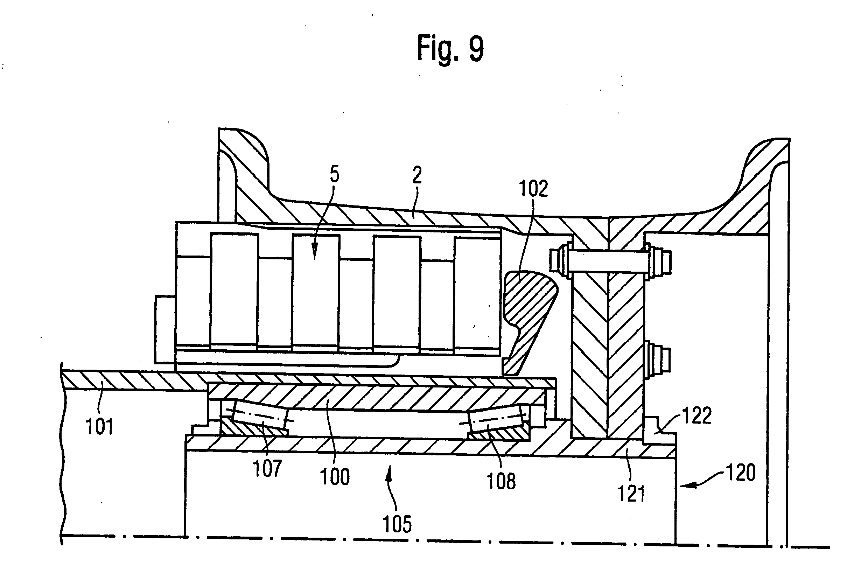

Die Varianten nach den Figuren 6 bis 9 zeigen erfindungsgemäße Radlagerungen, bei denen das Außenring-Lagergehäuse 100 jeweils drehfest an einer Hohlachse 101 oder einem Achsstummel fixiert ist. An dem Außenring-Lagergehäuse 100 ist in vorbeschriebener Weise jeweils ein Gegenlager 102 über eine Schraubverbindung 103 lösbar befestigt in der Art und mit den Vorteilen, wie zuvor bereits beschrieben (Figuren 6 und 7). Alternativ (Figuren 8 und 9) kann das Gegenlager 102 auch an der Hohlachse 101 befestigt sein.

In weiterer Gemeinsamkeit ist bei den Ausführungsbeispielen nach den Figuren 6 bis 9 die Lageranordnung 105 quasi vollständig innerhalb der Bremsenanordnung 5 angeordnet. Damit lässt sich trotz vergleichsweise weiter Beabstandung der Wälzlager 107, 108 eine in axialer Richtung sehr kompakte Bauform der Radlagerung realisieren.

Wie beispielsweise Figur 7 verdeutlicht, ist beim Lösen der nur schematisch angedeuteten Schraubverbindung 110 zwischen der Felge 2 und einer inneren Hohlachse 112, die über die Wälzlager 107 und 108 drehbeweglich gegenüber dem Außenring-Lagergehäuse 100 gelagert ist, ein besonders guter Zugriff auf die Bremsenanordnung 5 möglich. Die in Figur 7 gezeigte Ausführung hat noch den zusätzlichen Vorteil, dass nach Demontage der Felge 2 und des Gegenlagers 102 und Entnahme der Bremsenanordnung 5 eine Verbindungsschraube 114 auch von der rechten Seite her zugänglich wird, über die das Außenring-Lagergehäuse 100 mit der Hohlachse 101 verschraubt ist.

Figur 8 zeigt eine weitere Ausgestaltungsform, bei der in dem Außenring-Lagergehäuse 100 zugleich Laufflächen 116, 117 für die Wälzkörper 118, 119 der Wälzlager 107, 108 integral eingeformt sind. Das Außenring-Lagergehäuse 100 ist beispielsweise über eine Verschraubung oder einen Sprengring 120 in der als Träger dienenden Hohlachse 101 fixiert. Mit dieser Ausgestaltungsform nach den Figuren 8 ff. kann die Bremsenanordnung 5 als so genannter "Floating"-Bremssattel auch ohne speziellen Bremssattelfuß realisiert sein.

Figur 9 zeigt noch eine Besonderheit hinsichtlich der Fixierung der Felge an dem drehbaren Bereich der Lageranordnung, der bei diesem Beispiel von der inneren Hohlachse 121 gebildet ist. Die Felge 2 ist hier nämlich in besonders einfacher Weise über eine Achsmutter 122 mit der Hohlachse 121 verschraubt.

### Bezugszeichenliste

- A: Detailansicht aus Figur 2

- 1: Radlagerung
- 2: Felge
- 3, 4: Felgenteile
- 5: Bremsenanordnung
- 6: Längsachse
- 7: Bremsbeläge/Bremsklötze
- 8: Bremsscheiben
- 10: Stempel
- 12: Bremskraft
- 14: Gegenlager
- 20: Achsstummel/Hohlachse
- 21, 22: Innenringe
- 23, 24: Wälzlager
- 25, 26: Lageraußenringe
- 28: Außenring-Lagergehäuse
- 30: Achsmutter
- 31: drehbarer Teil
- 32: Fortsatz
- 33: Schrauben
- 40: Außenring-Lagergehäuse
- 42: Verschraubungen
- 44: Schraubverbindungen
- 45: drehender Teil
- 46: Lageranordnung
- 48: Verschraubung
- 49: Fußbereich
- 50: Gegenlapt
- 53, 54: Fortsätze
- 56: Clip
- 58: Dichtung
- 60: Material des Außenring-Lagergehäuses
- 70: äußeres Wälzlager
- 71: Lageranordnung
- 72: innenliegendes Wälzlager
- 74: Außenring-Lagergehäuse
- 75: Stufung
- 77: Achsmutter
- 78: Hohlachse
- 80: Lageranordnung
- 81: Verschraubung
- 82: Außenring-Lagergehäuse
- 84, 85: Lagerinnenringe
- 86: Achsmutter
- 87: Achse
- 88: Träger
- 89: Gegenlager
- 90: Bremsstempel
- 92: Schraubverbindung
- 100: Außenring-Lagergehäuse
- 101: Hohlachse
- 102: Gegenlager
- 103: Schraubverbindung
- 105: Lageranordnung
- 107, 108: Wälzlager
- 110: Schraubverbindung
- 112: Hohlachse
- 114: Verbindungsschraube
- 116, 117: Laufflächen
- 118, 119: Wälzkörper
- 120: Sprengring
- 121: innere Hohlachse
- 122: Achsmutter

## Patentansprüche

1. Radlagerung (1) eines Flugzeugfahrwerks,
mit einer Felge (2), die über zwei Wälzlager (23, 24) einer Lageranordnung um eine Achse (6) drehbar gelagert ist und
mit einem einteiligen Außenring-Lagergehäuse (28), in dem die Außenringe (25, 26) der Wälzlager (23, 24) gemeinsamen aufgenommen Sind, **dadurch gekennzeichnet, dass**
die Felge (2) lösbar mit der Lageranordnung (31) derart verbunden ist, dass die Felge (2) unabhängig von der Lageranordnung (31) montierbar bzw. demontierbar ist.

2. Radlagerung nach Anspruch 1, wobei,
das Außenring-Lagergehäuse (28) den drehbaren Teil (30) der Lageranordnung (28) bildet.

3. Radlagerung nach Anspruch 1 oder 2, wobei,
die Felge (2) zweiteilig ist.

4. Radlagerung nach einem der vorangehenden Ansprüche, wobei
die Außenringe (21, 22) als integrale Bestandteile des Außenring-Lagergehäuses (28) aus dem Material (60) des Lagergehäuses gebildet sind.

5. Radlagerung nach einem der vorangehenden Ansprüche, wobei
die Lagerinnenringe (21, 22) der Wälzlager (23,24) Fortsätze (53, 54) aufweisen, die aufeinander zulaufen und zur Einstellung einer axialen Distanz bzw. Vorspannung der Wälzlager (23,24) dienen.

6. Radlagerung nach Anspruch 5, wobei,
die Fortsätze (53, 54) über einen Clip (56) miteinander vorverbunden sind.

7. Radlagerung nach Anspruch 5 oder 6, wobei,
zwischen den Endbereichen der Fortsätze (53, 54) eine umlaufende Dichtung (58) aufgenommen ist.

8. Radlagerung nach einem der vorangehenden Ansprüche, wobei
an dem Außenring-Lagergehäuse (100) ein Gegenlager (102) lösbar befestigt ist, der eine von einer Scheibenbremsenanordnung (5) im Bremsfall aufgebrachte Axialkraft aufnimmt.

9. Radlagerung nach einem der vorangehenden Ansprüche, wobei
das äußere Wälzlager (70) der Radlagerung einen größeren Durchmesser als das innen liegende Wälzlager (72) aufweist.

10. Radlagerung nach einem der Ansprüche 8 oder 9, wobei
die Lageranordnung in axialer Richtung gesehen neben der Bremsenanordnung (5) angeordnet ist.

11. Radlagerung nach einem der Ansprüche 8 oder 9,
wobei die Lageranordnung (105) von der Bremsenanordnung (5) umgeben ist.

## Claims

1. Wheel bearing (1) of an aircraft landing gear,
having a rim (2) which is mounted via two anti-friction bearings (23, 24) of a bearing arrangement such that it can rotate about an axle (6), and
having a one-piece outer ring bearing housing (28), in which the outer rings (25, 26) of the anti-friction bearings (23, 24) are jointly accommodated,
**characterized in that** the rim (2) is detachably joined to the bearing arrangement (31) in such a way that the rim (2) can be mounted and dismounted independently of the bearing arrangement (31).

2. Wheel bearing according to Claim 1,
the outer ring bearing housing (28) forming the rotatable part (30) of the bearing arrangement (28).

3. Wheel bearing according to Claim 1 or 2,
the rim (2) being in two parts.

4. Wheel bearing according to one of the preceding claims,
the outer rings (21, 22) being formed as integral constituent parts of the outer ring bearing housing (28) from the material (60) of the bearing housing.

5. Wheel bearing according to one of the preceding claims,
the bearing inner rings (21, 22) of the anti-friction bearings (23, 24) having extensions (53, 54) which run toward each other and are used to set an axial spacing or prestress of the anti-friction bearings (23, 24).

6. Wheel bearing according to Claim 5,
the extensions (53, 54) being previously joined to each other via a clip (56).

7. Wheel bearing according to Claim 5 or 6,
a peripheral seal (58) being accommodated between the end regions of the extensions (53, 54).

8. Wheel bearing according to one of the preceding claims,
a counter-bearing (102) being detachably fixed to the outer ring bearing housing (100) and absorbing the axial force applied by a disk brake arrangement (5) during braking.

9. Wheel bearing according to one of the preceding claims,
the outer anti-friction bearing (70) of the wheel bearing having a greater diameter than the inner anti-friction bearing (72).

10. Wheel bearing according to either of Claims 8 and 9,
the bearing arrangement being arranged beside the brake arrangement (5), as seen in the axial direction.

11. Wheel bearing according to either of Claims 8 and 9,
the bearing arrangement (105) being surrounded by the brake arrangement (5).

## Revendications

1. Système de palier de roue (1) d'un train d'atterrissage d'avion,
comprenant une jante (2) qui est supportée à rotation autour d'un axe (6) par le biais de deux paliers à roulement (23, 24) d'un agencement de palier, et
comprenant un boîtier de palier pour bague extérieure d'une seule pièce (28), dans lequel les bagues extérieures (25, 26) des paliers à roulement (23, 24) sont reçues en commun, **caractérisé en ce que**
la jante (2) est connectée de manière détachable à l'agencement de palier (31) de telle sorte que la jante (2) puisse être montée et démontée indépendamment de l'agencement de palier (31).

2. Système de palier de roue selon la revendication 1, dans lequel
le boîtier de palier pour bague extérieure (28) forme la partie rotative (30) de l'agencement de palier (28).

3. Système de palier de roue selon la revendication 1 ou 2, dans lequel
la jante (2) est en deux parties.

4. Système de palier de roue selon l'une quelconque des revendications précédentes, dans lequel les bagues extérieures (25, 26) sont réalisées sous forme de constituants intégraux du boîtier de palier pour bague extérieure (28) en le matériau (60) du boîtier de palier.

5. Système de palier de roue selon l'une quelconque des revendications précédentes, dans lequel les bagues intérieures de palier (21, 22) des paliers à roulement (23, 24) présentent des saillies (53, 54) qui s'étendent l'une vers l'autre et qui servent à l'ajustement d'une distance axiale ou d'une précontrainte axiale des paliers à roulement (23, 24).

6. Système de palier de roue selon la revendication 5, dans lequel les saillies (53, 54) sont pré-connectées l'une à l'autre par le biais d'un clip (56).

7. Système de palier de roue selon la revendication 5 ou 6, dans lequel un joint d'étanchéité périphérique (58) est reçu entre les régions d'extrémité des saillies (53, 54).

8. Système de palier de roue selon l'une quelconque des revendications précédentes, dans lequel un contre-palier (102) est fixé de manière détachable sur le boîtier de palier pour bague extérieure (100), lequel contre-palier reçoit une force axiale appliquée par un agencement de frein à disque (5) en cas de freinage.

9. Système de palier de roue selon l'une quelconque des revendications précédentes, dans lequel le palier à roulement extérieur (70) du système de
palier de roue présente un plus grand diamètre que le palier à roulement (72) situé à l'intérieur.

10. Système de palier de roue selon l'une quelconque des revendications 8 ou 9, dans lequel
l'agencement de palier est disposé, vu dans la direction axiale, à côté de l'agencement de frein (5).

11. Système de palier de roue selon l'une quelconque des revendications 8 ou 9,
dans lequel l'agencement de palier (105) est entouré par l'agencement de frein (5).
